# DEMANDE DE BREVET EUROPEEN

(11) **EP 1 804 195 A1**
(43) Date de publication de la demande: **04.07.2007**
(21) Numéro de dépôt: 05113072.2
(22) Date de dépôt: 29.12.2005
(51) Int. Cl.: G06K 19/06

(54) **Procédé de marquage codé d'un produit de petite taille, et produit marqué obtenu selon ledit procédé**

(71) Demandeur: MONTRES BREGUET S.A., 1344 L'Abbaye (CH)
(72) Inventeur: Kayal, Abdul-Hamid, 2000 Neuchâtel (CH); Lugt, Eric, 1439 Rances (CH)
(74) Mandataire: Vigand, Philippe

(57) **Abrégé**

Le procédé permet de réaliser une opération de marquage codé sur un produit de petite taille, tel qu'un produit horloger (10) ou de bijouterie. Le procédé consiste tout d'abord à réaliser une première opération mathématique pour crypter un identifiant (13), tel qu'un numéro de série du produit à marquer à l'aide d'une clé privée d'un algorithme spécifique à paire de clés privée et publique pour obtenir un premier authentifiant. Le premier authentifiant comprend une première longueur de données définie par un premier grand nombre de caractères alphanumériques. Ce premier authentifiant est crypté à l'aide d'une seconde opération mathématique utilisant une fonction du type Hash pour obtenir un second authentifiant. Ce second authentifiant comprend une seconde longueur de données définie par un second nombre réduit de caractères alphanumériques plus petit que le premier nombre de caractères. Le second authentifiant est converti en une image codée, qui est de préférence un code à barres à deux dimensions (11) afin d'être placé sur le produit en tant que marque codée afin de permettre son authentification.

## Description

La présente invention concerne un procédé de réalisation d'un marquage codé d'un produit de petite taille, tel qu'un produit horloger ou de bijouterie de manière à pouvoir l'authentifier.

On entend par produit de petite taille, tout produit ou instrument de la taille d'une montre ou de ses composants, d'un collier, d'un bracelet, d'une bague, d'une pierre précieuse, ou d'autres instruments.

Pour empêcher toute contrefaçon de produits, notamment de produits de luxe, tels que des produits horlogers ou de bijouterie, il est nécessaire de placer sur chaque produit une marque ou indication codée de manière à pouvoir l'identifier et l'authentifier. Cette marque codée peut être placée durant le procédé de fabrication du produit pour permettre de garantir par la suite l'authenticité du produit fabriqué. La marque codée placée sur ledit produit ne doit également pas être de grande dimension de manière à ne pas nuire à l'esthétisme du produit dans le cas où la marque est placée sur une partie externe du produit visible à l'oeil nu.

Pour ce faire, différentes manières de marquage ont déjà été proposées par le passé pour assurer cette identification et cette authentification spécifique dudit produit. La marque codée peut être camouflée sur le produit ou faire partie d'autres indications de marquage. La marque codée peut être basée également sur un identifiant dudit produit, qui peut être le numéro de série attribué au produit lors du procédé de fabrication. Cet identifiant est ensuite crypté généralement par un algorithme de cryptage usuel de manière à obtenir un authentifiant composé de plusieurs caractères alphanumériques dont le nombre de caractères est souvent fonction de la dimension de la clé de cryptage utilisée.

On peut citer à ce titre le brevet EP 0 889 448 qui décrit une méthode pour empêcher la contrefaçon de produits de luxe, tels que des montres. Chaque montre peut comprendre une marque codée, qui est gravée sur une partie de la montre. Cette marque est composée d'un identifiant relatif à un numéro de série du produit et d'une portion cryptée. La portion cryptée est obtenue à l'aide d'une partie de l'information relative à la montre, qui est cryptée par une clé privée d'un algorithme à paire de clés privée et publique. La clé publique permet à l'aide dudit algorithme de décrypter la portion cryptée pour retrouver la partie de l'information.

Un inconvénient d'une telle méthode du document EP 0 889 448 est qu'il n'est utilisé qu'une partie de l'information de la montre et non l'intégralité de l'identifiant, qui est par exemple le numéro de série du produit, pour obtenir la portion cryptée. De plus, même avec une partie de l'identifiant, la portion cryptée obtenue à l'aide de l'algorithme est de trop grande dimension pour pouvoir être placée sur un produit de petite taille afin de garantir une grande sécurité vis-à-vis d'éventuelles contrefaçons.

Il est également connu de convertir un authentifiant, qui comprend un grand nombre de caractères alphanumériques obtenu par un algorithme de cryptage usuel sur la base d'un numéro de série du produit, en un code à barres à deux dimensions. Ce code à barres à deux dimensions est de dimension plus petite que l'ensemble des caractères alphanumériques de l'authentifiant. Cependant, ce code à barres est néanmoins de trop grande dimension pour pouvoir être placé sur un produit de petite taille et être lu aisément par un simple lecteur numérique de codes à barres.

La présente invention a pour but principal de fournir un procédé de réalisation d'un marquage codé d'un produit de petite taille pour pallier les inconvénients de l'art antérieur cité ci-devant et pour garantir une grande sécurité de l'authentification dudit produit fabriqué afin d'empêcher toute contrefaçon.

A cet effet, la présente invention a pour objet un procédé de réalisation d'un marquage codé d'un produit de petite taille cité ci-devant, qui comprend les caractéristiques mentionnées dans la revendication 1.

Des étapes particulières avantageuses du procédé sont définies dans les revendications dépendantes 2 à 9.

Un avantage du procédé de marquage codé d'un produit de petite taille réside dans le fait qu'il permet d'authentifier de manière sûre un produit, notamment un produit de luxe, en utilisant un second authentifiant converti de taille réduite, qui est obtenu sur la base d'un identifiant du produit. Pour obtenir l'image codée du second authentifiant sur la base de l'identifiant qui peut être le numéro de série du produit, il est nécessaire de réaliser une première opération mathématique de cryptage de l'identifiant à l'aide d'une clé d'un algorithme de sécurité spécifique, et une seconde opération mathématique de cryptage à l'aide d'une fonction de type Hash. De préférence, il est utilisé un algorithme de sécurité asymétrique à paire de clés privée et publique.

Grâce à la double opération de cryptage, cela garantit une plus grande sécurité vis-à-vis de toute contrefaçon éventuelle du produit de luxe, tel qu'un produit horloger ou de bijouterie. La double opération de cryptage, avec notamment la fonction Hash, ne permet pas de retrouver l'identifiant sur la base du second authentifiant obtenu. De plus, cela permet d'obtenir un second authentifiant converti de taille réduite susceptible de pouvoir être placé même sur une partie extérieure dudit produit sans nuire à son aspect esthétique. La surface de l'image codée, qui est de préférence un code à barres à deux dimensions, peut être inférieure à 1 mm², par exemple de 0.36 mm². Ce code à barres de taille réduite peut être facilement lu par un lecteur numérique de codes à barres traditionnel ou être également examiné sous une loupe sans problème.

De préférence pour la réalisation d'un marquage codé d'un boîtier d'une montre, la marque codée peut être placée entre les cornes du boîtier pour être camouflée par une extrémité du bracelet montée entre les cornes. Une marque codée supplémentaire peut également être placée sur une partie intérieure du boîtier en combinaison d'un logo de la marque de montre. Une empreinte de la marque codée combinée avec le logo de la marque de montre peut être réalisée dans le matériau du boîtier. De plus, le numéro de série peut compléter la marque codée et le logo de la marque de montre pour former une empreinte codée. Un tel marquage codé peut également être effectué sur le mouvement horloger de la montre, sur le cadran de montre et éventuellement sur des aiguilles d'indication de l'heure.

Avantageusement, le premier authentifiant comprend un grand nombre de caractères dépendant de la taille importante de la clé de l'algorithme spécifique pour garantir une grande sécurité. Une clé privée est utilisée par l'algorithme du type asymétrique. Ce nombre important de caractères obtenu peut être placé sur une carte d'identification du produit, qui peut être fournie avec le produit vendu. Une conversion de ce premier authentifiant en un code à barres à deux dimensions peut également être réalisée afin d'être placé sur ladite carte. Avec ce premier authentifiant, il est possible avec la clé publique de l'algorithme asymétrique de retrouver l'identifiant initial. Ce premier authentifiant peut également être fourni ou calculé par l'usine ayant fabriqué ledit produit ou par un centre d'authentification par mesure de sécurité, qui a la clé privée de l'algorithme. Par contre avec le second authentifiant converti ou non en code à barres à deux dimensions, il n'est pas possible de retrouver l'identifiant.

Avantageusement, la marque ou indication codée sous forme d'un code à barres à deux dimensions peut être imprimée ou gravée dans le matériau du produit. La gravure peut être réalisée par un faisceau laser. Une signature supplémentaire à l'indication codée peut être aussi obtenue en fonction d'une profondeur programmée de gravure à l'aide du faisceau laser. Lors d'une opération de lecture par un lecteur à faisceau laser de la marque codée, ladite signature propre au laser de marquage peut être déterminée en plus de la simple lecture du code à barres à deux dimensions. De cette façon, une sécurité supplémentaire pour l'authentification du produit de luxe peut être obtenue.

A cet effet, la présente invention a également pour objet un produit de petite taille marqué à l'aide du procédé de réalisation d'un marquage codé, qui comprend les caractéristiques mentionnées dans la revendication 10.

Des formes particulières avantageuses d'exécution du produit sont définies dans les revendications dépendantes 11 et 12.

Les buts, avantages et caractéristiques du procédé de réalisation d'un marquage codé d'un produit de petite taille apparaîtront mieux dans la description suivante de manière non limitative en liaison avec les dessins dans lesquels :
La figure 1 représente schématiquement un organigramme de différentes étapes du procédé de réalisation d'un marquage codé d'un produit de petite taille selon l'invention, et
la figure 2 représente un boîtier de montre en tant que produit de petite taille, sur lequel est placé une ou deux marques codées combinées avec un numéro de série du boîtier et/ou un logo de la marque de montre réalisé par le procédé de marquage selon l'invention.

Dans la description suivante, il n'est fait référence qu'au marquage codé d'un produit horloger ou de bijouterie, même si tout autre produit de petite taille peut être marqué selon le procédé de marquage codé selon l'invention. Comme les différentes opérations de cryptage utilisées dans ledit procédé de réalisation d'un marquage codé sont connues d'un homme du métier dans ce domaine technique, elles ne seront relatées que de manière simplifiée.

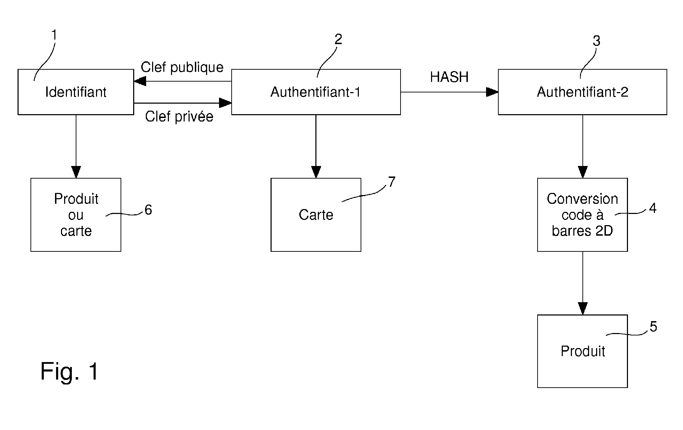

La figure 1 montre schématiquement les principales étapes du procédé de réalisation d'un marquage codé d'un produit de petite taille, tel qu'un produit horloger. A l'étape 1, il est tout d'abord attribué un numéro d'identification du produit horloger ou de bijouterie par un système standard (MRP) de gestion de la production ou de gestion de la distribution, comme par exemple le SAP, Navision ou autre. Ce numéro d'identification est en principe unique pour chaque produit. II peut être composé d'une suite de caractères alphanumériques d'une longueur adaptée au système de suivi de la production. Cet identifiant peut être directement imprimé ou gravé sur ledit produit à suivre à l'étape 6, ou inscrit sur une carte d'identification du produit, qui peut être fournie avec le produit vendu.

Une première opération mathématique est effectuée pour crypter l'identifiant du produit à marquer à l'aide d'un algorithme de cryptage mathématique asymétrique usuel (RSA, DH, EC ou autre), combiné ou non avec un cryptage symétrique usuel (AES, DES ou autre). De manière à garantir la plus grande sécurité, il est choisi un algorithme asymétrique à paire de clés privée et publique, par exemple du type RSA, pour obtenir un premier authentifiant à l'étape 2 en cryptant l'identifiant à l'aide de la clef privée. Une clef privée de longueur égale par exemple à 1024 bits est de préférence utilisée, car plus la longueur de la clef est grande et plus la probabilité d'obtenir deux premiers authentifiants identiques à partir de deux identifiants différents est extrêmement faible (env. 10⁻³⁰⁸).

Le premier authentifiant obtenu à l'étape 2 comprend une première longueur de données, qui peut être composée d'un certain nombre de bits ou de caractères alphanumériques. Avec une clef privée composée de 1024 bits, voire de 2048 bits, il est possible d'obtenir un premier authentifiant composé de 171 caractères alphanumériques, voire de 342 caractères alphanumériques distinguant les lettres majuscules et minuscules ou des symboles. Comme il est nécessaire de réduire au maximum l'indication ou marque codée à placer sur le produit horloger ou de bijouterie pour ne pas nuire à son aspect esthétique, ce premier authentifiant ne peut pas être placé directement sur le produit à marquer. Même en convertissant ledit premier authentifiant en un code à barres à deux dimensions, il ne peut pas être suffisamment réduit en taille pour être placé sur ledit produit, car il doit être possible de lire facilement ce code à barres à l'aide d'un lecteur numérique de code à barres standard du marché ou sous une loupe. La surface disponible sur le produit pour un authentifiant n'est en principe que de quelques mm².

Ce premier authentifiant peut être par contre inscrit tout comme l'identifiant sur la carte accompagnant le produit vendu à l'étape 7. Il peut se présenter sur ladite carte sous la forme d'une suite de caractères alphanumériques et/ou d'un code à barres à deux dimensions obtenu de la conversion du premier authentifiant. La carte peut également comprendre en plus du premier authentifiant et de l'identifiant, diverses données relatives au fonctionnement de la montre et à un historique de fabrication converties également en une matrice de code à barres à deux dimensions.

Avec ce premier authentifiant inscrit sur la carte, il est possible avec la clé publique de l'algorithme asymétrique de retrouver l'identifiant initial pour une première vérification d'authentification du produit. Pour ce faire, il peut être utilisé un instrument à calculatrice du type bancaire ou un support d'information à logiciel pour ordinateur (CD) fourni. La clé publique est mémorisée dans l'instrument ou sur le support pour un calcul à l'aide du même algorithme asymétrique ayant servi au cryptage de l'identifiant. L'identifiant obtenu par l'opération de décryptage du premier authentifiant est ainsi comparé à l'identifiant inscrit sur la carte ou à l'identifiant imprimé ou gravé sur le produit.

Si l'identifiant est imprimé ou gravé sur le produit, il est toujours possible en cas de perte de la carte de faire la demande à la maison mère ou au centre d'authentification pour obtenir le premier authentifiant. La maison mère ou le centre d'authentification possède une base de données des produits marqués fabriqués et vendus, ainsi que les logiciels de calcul utilisant un ou plusieurs algorithmes à paire de clés privée et publique. Le transfert de cette information par la maison mère peut être réalisé par tout moyen de transmission en ligne ou par messagerie électronique ou par poste par exemple.

De manière à réduire la taille du marquage codé tout en renforçant sa sécurité, une seconde opération mathématique est effectuée pour crypter le premier authentifiant à l'aide d'une nouvelle fonction mathématique standard du type Hash, comme par exemple le MD5 ou le SHA à l'étape 3. Un second authentifiant est ainsi obtenu sur la base du premier authentifiant à grande première longueur de données. Ce second authentifiant comprend une seconde longueur de données bien plus petite que la première longueur de données du premier authentifiant. La seconde longueur de données peut être composée de 128 bits ou 160 bits de caractères binaires, qui sont représentés par 21 ou 26 caractères alphanumériques par exemple.

Même avec un second authentifiant de longueur de données réduite, la probabilité d'obtenir deux seconds authentifiants identiques à partir de deux premiers authentifiants différents est extrêmement faible (env. 10-39). Ce second authentifiant est donc une représentation mathématique pratiquement unique, qui a été codée avec une haute sécurité mais avec un plus petit nombre de caractères. De ce fait, il se prête mieux pour pouvoir marquer un produit de petite taille. Grâce à cette seconde opération mathématique de cryptage pour obtenir ce second authentifiant, cela complique toute tentative de contrefaçon de personnes malintentionnées.

Ce second authentifiant pourrait être placé directement en tant que marque codée sur le produit à marquer. Toutefois selon l'invention, ce second authentifiant, qui est composé par exemple d'une suite réduite de caractères alphanumériques est converti en une image codée en tant que marque ou indication codée à l'étape 4. Cette image codée est de préférence un code à barres à deux dimensions qui est de relativement petite dimension. Ce code à barres à deux dimensions représentatif du second authentifiant peut être facilement placé sur le produit en tant que marque codée. La surface de ce code à barres peut être inférieure à 1 mm², par exemple de 0.36 mm² sans nuire à l'aspect esthétique du produit de luxe sur lequel il est placé. Même avec une dimension aussi réduite, ce code à barres peut être lu sans problème par un lecteur numérique standard de code à barres ou à l'aide d'une loupe.

Le code à barres représentatif du second authentifiant peut être imprimé, étampé pour former une empreinte ou gravé dans la matière du produit horloger, ou par tout autre moyen de marquage indélébile à l'étape 5. La gravure peut être réalisée à l'aide d'un faisceau laser d'un appareil laser en tenant compte également de l'état de surface du produit à marquer. La longueur d'onde, la puissance, ainsi que l'optique de focalisation peuvent être paramétrés dans l'appareil laser pour graver le code à barres à une très faible dimension sur le produit horloger ou les bijoux. De plus, la surface du produit à graver peut être localement travaillée pour améliorer l'esthétique, ainsi que la lisibilité du code à barres.

Une signature complémentaire à la marque codée peut être aussi obtenue en programmant dans l'appareil laser une profondeur de gravure variable et/ou un angle de gravure déterminé. De cette façon, lors d'une opération de lecture par un lecteur à faisceau laser de la marque codée, ladite signature propre à l'appareil laser de marquage peut être déterminée en plus de la simple lecture du code à barres à deux dimensions. De cette façon, une sécurité supplémentaire pour l'authentification du produit de luxe peut être obtenue.

Le code à barres à deux dimensions représentatif du second authentifiant ne peut pas être reproduit directement par la simple connaissance de l'identifiant, car normalement ce n'est que la maison mère ou le centre d'authentification qui est à même de le reproduire pour plus de sécurité. Il est nécessaire de connaître, pour cela, la ou les clés privées utilisées dans l'algorithme de cryptage, ainsi que la fonction du type Hash pour obtenir le second authentifiant à convertir.

Il est à noter encore que si l'identifiant est le même pour tous les produits d'un fabricant, alors tous ces produits peuvent porter la même marque ou indication codée obtenue par le procédé selon l'invention. Cette marque sera alors le sceau crypté du fabricant. Toutefois, pour des fabricants différents ayant des clés privées différentes d'un même algorithme asymétrique, même si l'identifiant est identique, la marque codée obtenue est différente en fonction d'une clé de cryptage différente. En pratique et pour chacun des fabricants, l'identifiant est différent d'un produit à un autre produit notamment pour des produits de luxe. De ce fait, la marque ou indication codée sera différente pour chacun des produits fabriqués, ce qui permet également de fournir des données concernant le suivi de production de chacun des fabricants.

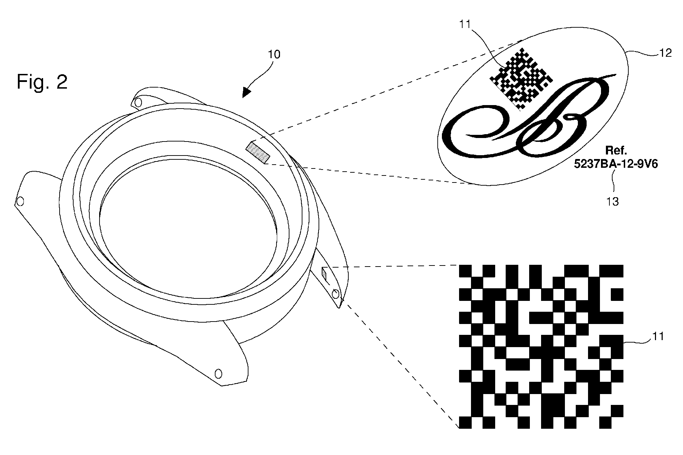

Un exemple de marquage codé d'un produit de petite taille est représenté sur la figure 2. Le produit marqué est un boîtier 10 d'une montre-bracelet. Pour ce faire, un premier code à barres à deux dimensions 11, représentatif du second authentifiant converti, peut être placé sur une partie extérieure du boîtier, par exemple entre les cornes du boîtier. De cette façon, le code à barres peut être camouflé par une extrémité du bracelet montée entre les cornes.

Un second code à barres à deux dimensions 11 provenant de la conversion du second authentifiant et/ou d'une désignation de la marque de montre peut également être placé sur une partie intérieure du boîtier. Ce second code à barres peut de ce fait être différent du premier code à barres. Ce second code à barres, en tant que marque codée, peut être combiné avec un logo 12 de la marque de montre.

Une empreinte de la marque codée combinée avec le logo de la marque de montre peut être réalisée dans le matériau de la partie intérieure du boîtier. De plus, le numéro de série 13, en tant qu'identifiant, peut compléter la marque codée 11 et le logo 12 de la marque de montre pour former une empreinte codée. Un tel marquage codé peut également être effectué sur le mouvement horloger de la montre, sur le cadran de montre, sur des aiguilles d'indication de l'heure, et éventuellement sur tout autre composant de la montre. Bien entendu, chaque code à barres, le logo de marque de montre et le numéro de série peuvent être imprimés ou gravés dans le matériau du boîtier.

A partir de la description qui vient d'être faite de multiples variantes du procédé de réalisation d'un marquage codé d'un produit de petite taille peuvent être conçues par l'homme du métier sans sortir du cadre de l'invention définie par les revendications. Le code à barres à deux dimensions provenant de la conversion du second authentifiant peut être remplacé par toute autre image codée pour autant que l'image codée soit facilement lisible par exemple à l'aide d'un faisceau lumineux, tel qu'un faisceau laser d'un appareil de lecture. L'identifiant peut comprendre un signe distinctif d'une marque horlogère ou de bijouterie.

## Revendications

1. Procédé de réalisation d'un marquage codé d'un produit de petite taille, tel qu'un produit horloger (10) ou de bijouterie, pour permettre de l'authentifier, ledit procédé consistant à réaliser une première opération mathématique pour crypter un identifiant du produit à marquer à l'aide d'une clé d'un algorithme de sécurité spécifique pour obtenir un premier authentifiant, **caractérisé en ce que** le procédé comprend également des étapes consistant à :
- crypter le premier authentifiant d'une première longueur de données en un second authentifiant à l'aide d'une seconde opération mathématique utilisant une fonction du type Hash, le second authentifiant étant composé d'une seconde longueur de données plus petite que la première longueur de données,
- convertir le second authentifiant en une image codée (11), et
- placer l'image codée sur le produit en tant que marque codée.

2. Procédé selon la revendication 1, **caractérisé en ce que** la première opération mathématique de cryptage permet de fournir un premier authentifiant dont la première longueur de données est composée d'une première suite de caractères binaires, qui est représentée par un premier nombre de caractères alphanumériques, et **en ce que** la seconde opération mathématique utilisant la fonction du type Hash permet de fournir un second authentifiant dont la seconde longueur de données est composée d'une seconde suite de caractères binaires, qui est représentée par un second nombre de caractères alphanumériques entre 5 et 20 fois plus petit que le premier nombre de caractères alphanumériques du premier authentifiant.

3. Procédé selon l'une des revendications 1 et 2, **caractérisé en ce que** la première opération mathématique pour crypter l'identifiant, qui est un numéro de série du produit à marquer, en un premier authentifiant est réalisé à l'aide d'une clé privée d'un algorithme asymétrique à paire de clés privée et publique, le premier nombre de caractères du premier authentifiant obtenu étant par exemple de 171 ou 342 caractères alphanumériques, et **en ce que** la seconde opération mathématique permet d'obtenir un second authentifiant représenté par un second nombre de caractères alphanumériques égal à 21 ou 26 caractères alphanumériques par exemple.

4. Procédé selon l'une des revendications précédentes, **caractérisé en ce que** le second authentifiant est converti en un code à barres à deux dimensions (11) pour être placé sur une surface du produit à marquer inférieure à 1 mm², de préférence voisine de 0.36 mm² de manière à pouvoir être lu facilement à l'aide d'un lecteur numérique de codes à barres.

5. Procédé selon la revendication 4, **caractérisé en ce que** le code à barres est gravé dans le matériau du produit à marquer à l'aide d'un faisceau laser d'un appareil laser.

6. Procédé selon la revendication 5, **caractérisé en ce qu'**une signature complémentaire à la marque codée gravée par faisceau laser peut être aussi obtenue en programmant l'appareil laser afin d'obtenir une profondeur de gravure variable ou un angle de gravure déterminé de manière à pouvoir être détecté par un lecteur numérique à faisceau laser.

7. Procédé selon l'une des revendications précédentes, pour lequel le produit à marquer est un boîtier de montre (10), un mouvement horloger, un cadran de montre ou une aiguille d'indication de l'heure, **caractérisé en ce que** l'image codée (11) est placée sur ledit produit en combinaison de l'identifiant, qui est un numéro de série du produit (13) et/ou une désignation de marque du produit horloger.

8. Procédé selon la revendication 7, **caractérisé en ce que** l'image codée (11) est placée sur ledit produit (10) en combinaison de l'identifiant (13) et d'un signe distinctif (12) de la marque du produit horloger, de préférence l'ensemble constitué par l'image codée, l'identifiant et le signe distinctif étant étampé dans le matériau du produit.

9. Procédé selon l'une des revendications 7 et 8, pour lequel le produit horloger est un boîtier de montre (10) muni de cornes de fixation d'un bracelet, **caractérisé en ce qu'**une première image codée (11) définie par un code à barres à deux dimensions est placée sur une partie extérieure du boîtier entre les cornes du boîtier de manière à être camouflée par une extrémité du bracelet fixée entre lesdites cornes, et **en ce qu'**une seconde image codée identique ou différente de la première image codée est placée sur une partie intérieure du boîtier en combinaison de l'identifiant (13) et du signe distinctif (12) de la marque du boîtier.

10. Produit de petite taille (10), tel qu'un produit horloger ou de bijouterie, marqué à l'aide du procédé de réalisation d'un marquage codé selon l'une des revendications précédentes, **caractérisé en ce qu'**il comprend sur au moins une surface une image codée (11) en tant que marque codée définie comme un code à barres à deux dimensions obtenu par une première opération mathématique de cryptage d'un identifiant à l'aide d'une clé d'un algorithme de sécurité spécifique, et par une seconde opération mathématique à l'aide d'une fonction du type Hash sur un premier authentifiant obtenu après la première opération mathématique.

11. Produit de petite taille (10), selon la revendication 10, **caractérisé en ce qu'**il est un boîtier de montre muni de cornes de fixation d'un bracelet, un mouvement horloger, un cadran de montre ou une aiguille d'indication de l'heure, et **en ce que** le code à barres à deux dimensions est gravé ou étampé dans le matériau du produit.

12. Produit de petite taille (10), selon la revendication 11, **caractérisé en ce que** le produit est un boîtier de montre où un premier code à barres à deux dimensions (11) est placé sur une partie extérieure du boîtier entre les cornes du boîtier de manière à être camouflé par une extrémité du bracelet fixée entre lesdites cornes, et **en ce qu'**un second code à barres à deux dimensions identique ou différent du premier code à barres est placé sur une partie intérieure du boîtier en combinaison de l'identifiant (13) et d'un signe distinctif (12) de la marque du boîtier.
